# EUROPEAN PATENT APPLICATION

(11) **EP 1 607 960 A2**
(43) Date of publication of application: **21.12.2005**
(21) Application number: 05104304.0
(22) Date of filing: 20.05.2005
(51) Int. Cl.: G11B 15/675

(54) **Cassette tape eject mechanism**

(30) Priority: 19.06.2004 KR 2004045821
(71) Applicant: SAMSUNG ELECTRONICS CO., LTD., Suwon-si, Gyeonggi-Do 442-742 (KR)
(72) Inventor: Park, Byeng-bae, Gyeonggi-do (KR); Kim, Jun-young, Yeongtong-gu Suwon-si Gyeonggi-do (KR); Oh, Jeong-hyeob, Dongan-gu Anyang-si Gyeonggi-do (KR); Sim, Jae-hoon, Yeongtong-gu Suwon-si Gyeonggi-do (KR); Lee, Seung-woo, Yeongtong-gu Suwon-si Gyeonggi-do (KR); Choi, Hyeong-seok, Yeongtong-dong/gu Suwon-si Gyeonggi-do (KR)
(74) Representative: Geary, Stuart Lloyd

(57) **Abstract**

A cassette tape ejecting apparatus has a chassis having a pin boss, a hook hole and a locking groove formed as a single body, a cassette housing installed on the chassis to be transferred to a tape insertion position and a tape ejection position, a cassette tape being mounted thereon, a locking lever being installed on the cassette housing, and having a locking protrusion hooked on the looking groove of the chassis when the cassette housing is transferred to the tape insertion position, an eject lever installed on the chassis to be rotated through the pin boss of the chassis in the forward/backward direction unlocks the locking protrusion from the locking groove of the chassis to eject the cassette tape, and a cassette switch turned on/off by the forward/backward rotation of the eject lever, for detecting ejection of the cassette tape.

## Description

The present invention relates to a cassette tape deck comprising a chassis, a cassette housing moveable between loaded and tape ejection positions, means for retaining the cassette housing in its loaded position and an eject lever for releasing the cassette housing from its loaded position.

Cassette tape decks are well-known and can be found in, for example, video tape cassette recorders (VCRs) and digital versatile camcorders (DVCs).

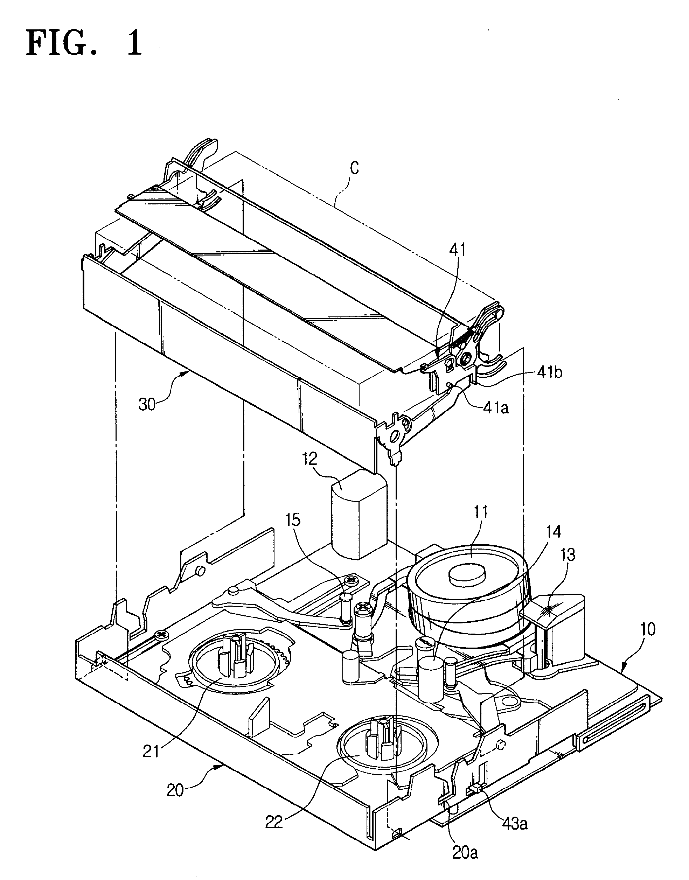

Referring to Figure 1, the deck of the conventional magnetic recording/reproducing apparatus includes a main chassis 10, a sub chassis 20 slidably installed on the main chassis 10 and a cassette housing 30 movably installed on the sub chassis 20, on which a tape cassette C is mounted.

A head drum 11, a loading motor 12, a capstan motor 13 and a plurality of guide rollers 14 and guide poles 15, constituting a tape running system are disposed on the main chassis 10. A pair of reel tables 21, 22 for driving the tape reels (not shown) of the tape cassette C are disposed on the sub chassis 20.

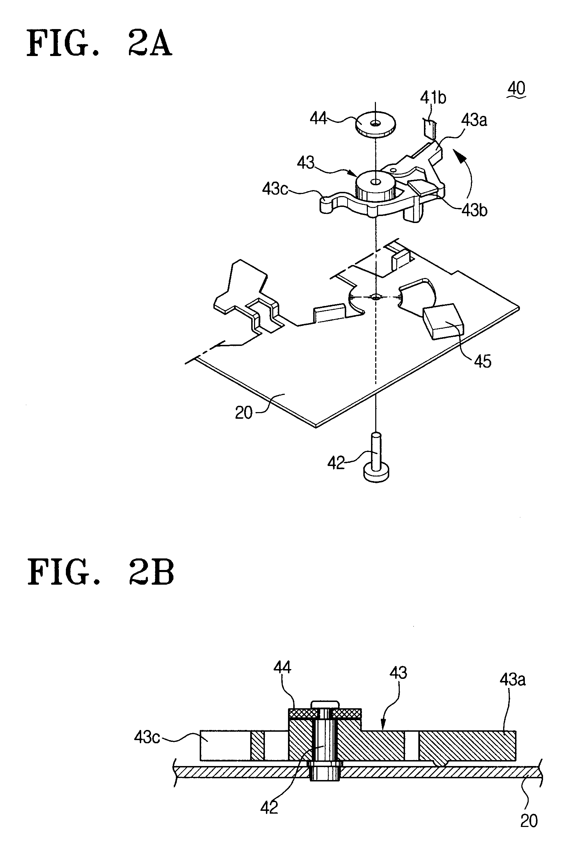

The cassette housing 30 can be moved between a loaded position and an ejection position. The deck of the magnetic recording/reproducing apparatus includes a tape cassette ejecting apparatus 40 (see Figures 2A and 2B) for locking the cassette housing 30 on the sub chassis 20, when it is in the loaded position, and unlocking the cassette housing 30 and transferring it to the ejection position for ejection of the tape cassette C.

As illustrated in Figures 1, 2A and 2B, the tape cassette ejecting apparatus 40 includes a locking lever 41, installed on the cassette housing 30, an eject lever 43, installed on the sub chassis 20, and a cassette switch 45.

The locking lever 41 has a locking protrusion 41 a and an unlocking protrusion 41b. When the cassette housing 30 is transferred to the loaded position, the locking protrusion 41 a is received a locking slot 20a formed on the sub chassis 20.

The eject lever 43 is installed on the sub chassis 20 for rotation by a pin 42 back and forth through a predetermined angle. The eject lever 43 includes an operation portion 43a, contacting the unlocking protrusion 41b of the locking lever 41, a pressing portion 43b and an elastic portion 43c. A washer 44 for preventing separation of the eject lever 43 is coupled onto the pin 42.

A cassette switch 45 is installed on one side of the sub chassis 20 for being opened and closed by the back and forth rotation of the eject lever 43.

In the tape cassette ejecting apparatus 40, when the cassette housing 30, on which the tape cassette C has been mounted, is transferred to the loaded position, the locking protrusion 41a of the locking lever 41 of the cassette housing 30 is hooked in the locking slot 20a of the sub chassis 20, thereby locking the cassette housing 30. The pressing portion 43b of the eject lever 43 presses a contact point of the cassette switch 45, to close the cassette switch 45.

When the user presses an eject button (not shown) to eject the tape cassette C, the eject lever 43 is rotated in the anticlockwise direction, as viewed in the drawing (arrowed direction in Figure 2a) to push the unlocking protrusion 41b of the locking lever 41, thereby freeing the locking protrusion 41a. Accordingly, the cassette housing 30 is unlocked and transferred to the ejection position. The cassette switch 45 is separated from the pressing portion 43b of the eject lever 43 and is thus opened.

However, this known tape cassette ejecting apparatus requires subsidiary components such as the pin 42 for coupling the eject lever 43 to the chassis 20 and the washer 44 for preventing separation of the eject lever 43, which inevitably increases the number of assembly components and the number of assembly process steps resulting in lower productivity and higher costs.

A tape cassette deck, according to the present invention, is characterised in that the pivot of the eject lever comprises a projection integrally formed with the chassis.

The projection may be is a shaft.

The eject lever is preferably clipped onto the projection. For example, the eject lever may comprise a hook member which extends through a hole in the chassis and engages the chassis to retain the eject lever on said projection.

A switch may be included for detecting whether the cassette housing is in its loaded or tape ejection positions. This switch may be mounted on the opposite side of the chassis to the cassette holder and the eject lever may be configured for operating the switch.

An embodiment of the present invention will now be described, by way of example, with reference to Figures 3 to 6 of the accompanying drawings, in which:
Figure 1 is a schematic perspective view of a deck of a conventional magnetic recording/reproducing apparatus;
Figure 2a and 2b are an exploded perspective view and an assembly cross-sectional view of the structure and operation of a tape cassette ejecting apparatus installed on the deck of Figure 1 respectively;
Figure 3 is a perspective view of a deck of a magnetic recording/reproducing apparatus using a tape cassette ejecting apparatus according to the present invention;
Figure 4 is an exploded perspective view of the tape cassette ejecting apparatus in Figure 3;
Figure 5 is an assembly cross-sectional view of Figure 4; and
Figure 6 is a front view of an eject lever of the tape cassette ejecting apparatus in Figure 3.

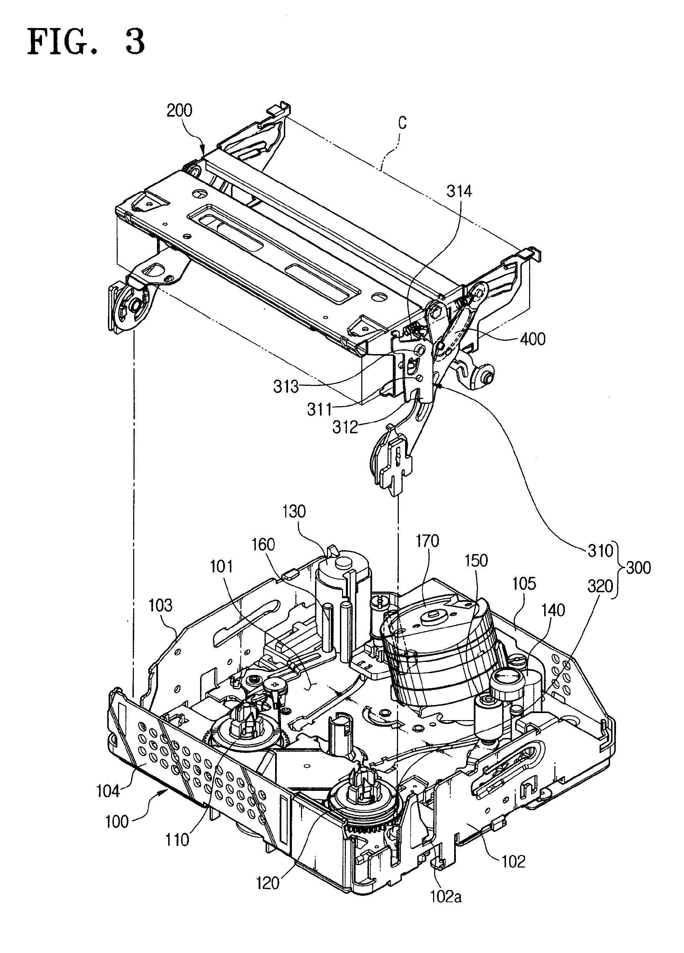

Referring to Figure 3, the chassis 100 of a cassette deck has a base surface 101 and four sides 102, 103, 104, 105, which are bent up from the edges of the base surface 101. The chassis 100 houses and supports a pair of reel tables 110, 120 for rotating tape reels (not shown) of a tape cassette C, a loading motor 130, a capstan motor 140, a plurality of guide rollers 150 and guide poles 160 constituting a tape running system, and a head drum assembly 170.

The cassette housing 200 is installed on the chassis 100 for movement between a loaded position and a tape ejection position by an X lever 400. The tape cassette C is mounted in the cassette housing 200. Therefore, the tape cassette C can be stably positioned on the reel tables 110, 120 of the chassis 100.

The tape cassette ejecting apparatus 300 locks the cassette housing 200 on the chassis 100, when the cassette housing 200 is transferred to the loaded position, and unlocks the cassette housing 200 and transfers the cassette housing 200 to the ejection position for ejection the tape cassette C.

As shown in Figures 3 to 6, the tape cassette ejecting apparatus 300 comprises, on the chassis 100, a pin boss 101a, a hook hole 101b and a locking slot 102a which are formed in a single body, a locking lever 310, installed on the cassette housing 200, an eject lever 320, installed on the chassis 100, and a cassette switch 330.

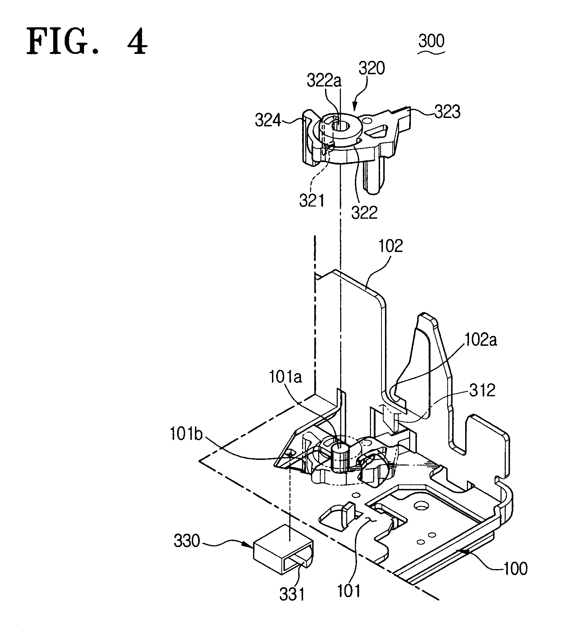

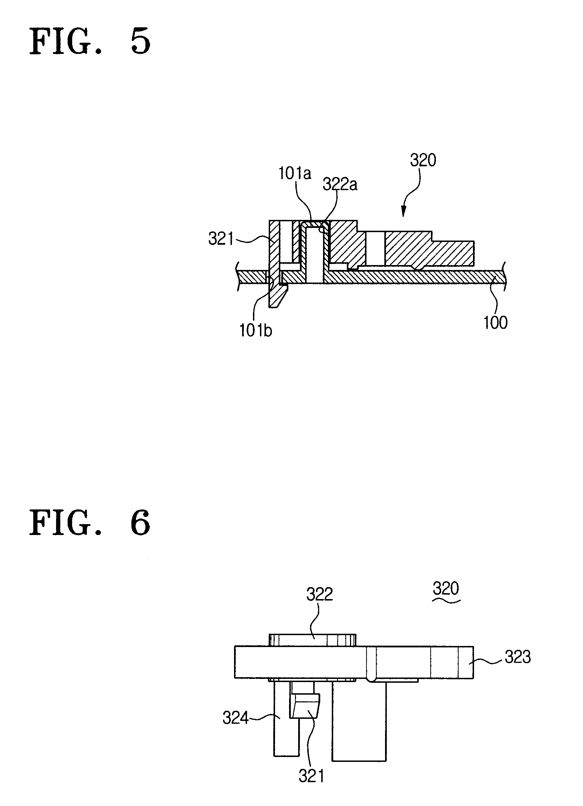

As depicted in Figures 4 and 5, the pin boss 101a is incorporated in the chassis 100 by deep-drawing. The eject lever 320 is rotatable back and forth around the pin boss 101a through a predetermined angle. The hook hole 101b is formed on the chassis 100 adjacently to the pin boss 101a. The locking slot 102a is formed on one side 102 of the chassis 100. The hook hole 101b and the locking slot 102a are explained below in more detail.

The locking lever 310 has a locking protrusion 311 hooked in the locking slot 102a when the cassette housing 200 is transferred to the loaded position and an unlocking protrusion 312, contacting the eject lever 320, which is explained below in more detail. The locking lever 310 is installed on the cassette housing 200 for rotation about an axle 313 so that the locking protrusion 311 can be elastically biased in the insertion direction into the locking slot 102a by a spring 314.

As mentioned above, the eject lever 320 is installed on the chassis 100 for rotation back and forth about the pin boss 101a through a predetermined angle. The eject lever 320 comprises a hook portion 321, hooked in the hook hole 101b of the chassis 100 to prevent separation of the chassis 100. Therefore, the eject lever 320 can be coupled to the chassis 100 to be fully operated, without using subsidiary materials, such as a pin or a washer.

The eject lever 320 comprises a body 322 having a pin hole 322a for housing the pin boss 101a of the chassis 100, an operation portion 323 and a pressing portion 324. The operation portion 323 contacts the unlocking protrusion 312 of the locking lever 310 and the pressing portion 324 controls a contact point 331 of the cassette switch 330 which is described below in more detail. In the eject lever 320 as shown in Figure 6, the pressing portion 324 is elastically formed on the body 322. Even if an excessive external force is applied to the eject lever 320, the pressing portion 324 buffers the force and efficiently operates the contact point 331 (as shown in Figure 4) of the cassette switch 330.

As described above, the cassette switch 330 is opened and closed by the back and forth rotation of the eject lever 320, for providing "locked" and "unlock" signals for the cassette housing 200 to a control portion (not shown).

Preferably, the cassette switch 330 is installed on the bottom surface of the chassis 100 to efficiently use the inside space of the chassis 100.

In the tape cassette ejecting apparatus described above, when the cassette housing 200, on which the tape cassette C has been mounted, is moved to the loaded position, the cassette housing 200 is locked. With the cassette housing 200 locked, in order to eject the tape cassette C, the eject lever 320 is rotated in the anticlockwise direction, as shown in Figure 4, thereby pushing the unlocking protrusion 312 of the locking lever 310. Thus, the cassette housing 200 is unlocked and moved to the tape ejection position.

The locking and unlocking operations of the cassette housing 200 are performed in the same manner as those of the conventional apparatus. However, the tape cassette ejecting apparatus 300 can easily couple the eject lever 320 to the chassis 100 by using the pin boss 101a incorporated with the chassis 100 and the hook portion 321 formed on the eject lever 320, instead of being required to use subsidiary materials, such as a pin or a washer.

A number of assembly process steps can be reduced by decreasing a number of assembly components. That is, the process step for installing the pin on the chassis and a process for assembling the eject lever to the pin and coupling the washer onto the pin can be omitted.

As discussed earlier, the tape cassette ejecting apparatus can couple the eject lever to the chassis to be rotated in the forward/backward directions though a predetermined angle, by using the pin boss formed on the chassis and the hook portion formed on the eject lever. That is, the tape cassette ejecting apparatus can reduce the number of the assembly components by omitting the subsidiary materials such as the pin or the washer, which results in lower costs and higher productivity.

## Claims

1. A cassette tape deck comprising:
a chassis (100);
a cassette housing (200) moveable between loaded and tape ejection positions;
means (102a, 311) for retaining the cassette housing (200) in its loaded position; and
an eject lever (320) for releasing the cassette housing (200) from its loaded position,
**characterised in that** the pivot (101a) of the eject lever (320) comprises a projection integrally formed with the chassis (100).

2. A deck according to claim 1, wherein said projection (101a) is a shaft.

3. A deck according to claim 1 or 2, wherein the eject lever (320) comprises a hook member (321) which extends through a hole (101b) in the chassis (100) and engages the chassis (100) to retain the eject lever (320) on said projection (101a).

4. A deck according to claim 1, 2 or 3, including a switch (330) for detecting whether the cassette housing (200) is in its loaded or tape ejection positions,
wherein the switch (330) is mounted on the opposite side of the chassis (100) to the cassette holder (200) and the eject lever (320) is configured for operating the switch (330).

5. A cassette tape ejecting apparatus of a magnetic recording/reproducing apparatus, comprising:
a chassis having a pin boss, a hook hole and a locking groove which are formed as a single body;
a cassette housing installed on the chassis to be transferred to a tape insertion position and a tape ejection position, a cassette tape being mounted thereon;
a locking lever being installed on the cassette housing, and having a locking protrusion hooked on the locking groove when the cassette housing is transferred to the tape insertion position; and
an eject lever installed on the chassis to be rotated through the pin boss in the forward/backward direction at a predetermined angle, for unlocking the locking protrusion from the locking groove to eject the cassette tape.

6. The apparatus as claimed in claim 5, comprising a cassette switch, which is turned on/off by the forward/backward rotation, respectively of the eject lever, for detecting the ejection of the cassette tape,
wherein the locking lever comprises an unlocking protrusion contacting the eject lever, and the eject lever comprises a body having a pin hole for housing the pin boss, an operation portion contacting the unlocking protrusion of the locking lever, and a pressing portion for operating the cassette switch.

7. The apparatus as claimed in claim 5, wherein the eject lever comprises a hook portion hooked on the hook hole of the chassis, for preventing separation.

8. The apparatus as claimed in claim 5, wherein the pin boss is formed by deep-drawing.

9. The apparatus as claimed in claim 6, wherein the pressing portion has elasticity to the body.

10. The apparatus as claimed in claim 6, wherein the cassette switch is installed on the bottom surface of the chassis.

11. A magnetic recording/reproducing apparatus comprising:
a chassis for supporting reel tables, a tape running system and a head drum;
a cassette housing installed on the chassis to be transferred to a tape insertion position and a tape ejection position, a cassette tape being mounted thereon; and
a cassette tape ejecting apparatus for locking the cassette housing on the chassis when the cassette housing is transferred to the tape insertion position, and unlocking the cassette housing and transferring the cassette housing to the tape ejection position to eject the cassette tape,
wherein the cassette tape ejecting apparatus comprises:
a pin boss, a hook hole and a locking groove which are formed as a single body with the chassis;
a locking lever being installed on the cassette housing, and having a locking protrusion hooked on the looking groove when the cassette housing is transferred to the tape insertion position, and an unlocking protrusion;
an eject lever installed on the chassis to be rotated through the pin boss in the forward/backward direction at a predetermined angle, for unlocking the locking protrusion from the locking groove to eject the cassette tape; and
a cassette switch turned on/off by the forward/backward rotation of the eject lever, for sensing ejection of the cassette tape.

12. The apparatus as claimed in claim 11, wherein the eject lever comprises a body having a pin hole for housing the pin boss, an operation portion contacting the unlocking protrusion of the locking lever, and a pressing portion for operating the cassette switch.

13. The apparatus as claimed in claim 12, wherein the eject lever comprises a hook portion hooked on the hook hole of the chassis, for preventing separation.

14. The apparatus as claimed in claim 12, wherein the pin boss is formed by deep-drawing.

15. The apparatus as claimed in claim 12, wherein the pressing portion has elasticity to the body.

16. The apparatus as claimed in claim 12, wherein the cassette switch is installed on the bottom surface of the chassis.
